# EUROPÄISCHE PATENTSCHRIFT

(11) **EP 1 138 031 B1**
(45) Veröffentlichungstag und Bekanntmachung des Hinweises auf die Patenterteilung: **11.05.2005**
(21) Anmeldenummer: 99960915.9
(22) Anmeldetag: 23.11.1999
(51) Int. Cl.: G08G 1/09

(54) **VERFAHREN ZUR ANFORDERUNG UND ZUR VERARBEITUNG VON VERKEHRSINFORMATIONEN**
METHOD FOR REQUIRING AND PROCESSING TRAFFIC INFORMATION
PROCEDE POUR DEMANDER ET TRAITER DES INFORMATIONS ROUTIERES

(30) Priorität: 30.11.1998 DE 19855230
(43) Veröffentlichungstag der Anmeldung: 04.10.2001
(73) Patentinhaber: ROBERT BOSCH GMBH, 70442 Stuttgart (DE)
(72) Erfinder: HESSING, Bernd, D-31188 Holle (DE); GOSS, Stefan, D-31137 Hildesheim (DE); HARTKOPP, Oliver, D-31234 Edemissen (DE)
(86) Internationale Anmeldenummer: PCT/DE1999/003659
(87) Internationale Veröffentlichungsnummer: WO 2000/033278

(56) Entgegenhaltungen:
- EP-A- 0 347 354
- WO-A-96/35198
- WO-A-97/01940
- WO-A-97/36434
- WO-A-98/26395
- WO-A-98/38618
- US-A- 5 774 479
- COLLESI S ET AL: "SMS BASED APPLICATIONS FOR GSM NETWORKS" TECHNICAL REPORTS - CSELT,IT,TURIN, Bd. 23, Nr. 3, 1. Juni 1995 (1995-06-01), Seiten 337-349, XP000573777 ISSN: 0393-2648

## Beschreibung

### Stand der Technik

Die Erfindung geht aus von einem Verfahren nach der Gattung des Hauptanspruchs und von einem Funksendeempfänger nach der Gattung des nebengeordneten Anspruchs 11. Aus der WO 98/26395 ist ein Verfahren zur Verkehrsinformation bekannt, wobei auf Anfrage und/oder automatisch Daten zwischen einer Zentraleinheit und einer mobilen Teilnehmereinheit übertragen werden und wobei die Daten Verkehrsinformationen beinhalten, die auf Anfrage und/oder automatisch durch die mobile Teilnehmereinheit an den Teilnehmer ausgegeben werden.

S. Collesi et al: "SMS based applications for GSM networks") offenbart ein Verfahren zur Übertragung von Verkehrsinformationen von einer Zentralen zu mindestens einem mobilen Empfänger im Rahmen eines Broadcast- oder Singlecast-Verfahrens per SMS (short message service des GSM-Systems). Den SMS-Informationen kann dabei durch das sendende Endgerät eine Gültigkeitsdauer zugeordnet werden, wobei ein SMS-Service-Center höchstens für die Dauer der Gültigkeitsdauer versucht, diese SMS-Information an den Adressaten zu übermitteln.

Weiter wird ein System zur Verfolgung eines Fahrzeugs als einen mögliche Applikation für SMS offenbart. Dazu werden von dem Fahrzeug mittels einer Ortungsvorrichtung, beispielsweise eines GPS-Empfängers Positionsdaten des Fahrzeugs erfasst und über eine Mobilfunkverbindung via SMS in regelmäßigen Zeitabständen Positionsinformationen des Fahrzeugs an eine Service-Station gemeldet

WO-A-98 38618 offenbart ein Verfahren zur Verkehrsinformationsabfrage durch ein Endgerät per SMS von einem Dienstanbieter. Auf eine Informationsanfrage mittels einer SMS durch das Endgerät stellt der Dienstanbieter Verkehrsinformationen zusammen und hält diese für einen Abruf für eine vorgegebene Zeitdauer bereit. Nach erfolgter Zusammenstellung der Informationen sendet der Dienstanbieter via SMS eine Information an das Endgerät, um dieses davon zu unterrichten, dass die Verkehrsinformationen bereit liegen. Nach Erhalt dieses Information kann das Endgerät die Informationen über den Sprachkanal, d.h. über eine bidirektionale Verbindung beim Dienstanbieter abrufen.

### Vorteile der Erfindung

Das erfindungsgemäße Verfahren mit den Merkmalen des Hauptanspruchs und der erfindungsgemäße Funksendeempfänger mit den Merkmalen des nebengeordneten Anspruchs 11 hat demgegenüber den Vorteil, daß Informationsanfragen, die von einem Funksendeempfänger an einen Dienstleister gesandt wurden, und vom Dienstleister zurückgesandte Informationen mit vorgegebenen Gültigkeitszeitwerten versehen werden. Dadurch wird die maximale Zeitspanne der Informationsbeschaffung berechenbar, auch wenn keine Datenwahlverbindung oder dgl. möglich bzw. sinnvoll ist.

Durch die in den Unteransprüchen aufgeführten Maßnahmen sind vorteilhafte Weiterbildungen und Verbesserungen des im Hauptanspruch angegebenen Verfahrens und des im Nebenanspruch angegebenen Funksendeempfängers möglich.

Es ist vorteilhaft, die Informationsanfragen, beispielsweise als Kurznachricht, über ein Funknetz, insbesondere ein Mobilfunknetz, zu übertragen und sie mit einem ersten Gültigkeitszeitwert zu versehen. Wenn einerseits der Gültigkeitszeitwert überschritten ist, andererseits aber die Informationsanfrage noch nicht zum Dienstleister übertragen ist, dann wird die Informationsanfrage im Funknetz automatisch gelöscht und kann somit auch keine vom Dienstleister zurückzusendende Information initiieren. Dies trägt zu einer vereinfachten Fehlerbehandlung des erfindungsgemäßen Verfahrens und zu einer einfacheren Ausführung des erfindungsgemäßen Funksendeempfängers bei. Weiterhin ist von Vorteil, die zurückgesandten Informationen ebenfalls in Form von Kurznachrichten, insbesondere SMS-Kurznachrichten nach dem GSM-Standard, zu empfangen, wobei die zurückgesandten Informationen von dem Dienstleister mit einem zweiten Gültigkeitszeitwert versehen werden, was ebenfalls zu einer einfacheren Fehlerbehandlung, insbesondere bei Kommunikationsstörungen, beiträgt.

Es ist vorteilhaft, daß der Funksendeempfänger Mittel umfaßt, seine Position, insbesondere in einem Straßennetz, zu bestimmen. Dadurch können Informationsanfragen in Abhängigkeit der Position des Funksendeempfängers angefordert werden.

Es ist besonders vorteilhaft, die Informationsanfragen in Abhängigkeit der Position des Funksendeempfängers zu generieren. Dadurch wird eine Vereinfachung der Informationsbeschaffung, beispielsweise zur Reduzierung der zu übertragenden Informationen, erreicht.

Weiterhin ist es Teil der Erfindung, daß eine Meldung im Funksendeempfänger generiert wird und/oder die Verwendung im Funksendeempfänger der von der Zentrale zurückgesandten Information unterdrückt wird, wenn eine erste vorgegebene Zeit nach Aussendung der ersten Informationsanfrage überschritten wurde. Dadurch ist es möglich, auf die Tatsache der verspätet empfangenen Information zu reagieren, beispielsweise indem ein Benutzer darauf aufmerksam gemacht wird, und/oder zurückgesandte Informationen zu ignorieren, beispielsweise wenn diese aufgrund einer großen Zeitverzögerung bei der Informationsübertragung für die Informationsverarbeitung, beispielsweise zur Navigation eines Fahrzeugs, veraltet und daher nicht mehr relevant ist.

Besonders vorteilhaft ist, nach einer ersten Informationsanfrage eine zeitlich nachfolgende zweite Informationsanfrage nach der Überschreitung einer zweiten vorgegebenen Zeit automatisch zu senden, wobei die zweite vorgegebene Zeit zum Zeitpunkt der ersten Informationsanfrage gestartet wird, wobei die erste vorgegebene Zeit, nach deren Überschreitung die zurückgesandten Informationen unterdrückt werden, zum Zeitpunkt der zweiten Informationsanfrage neu gestartet wird und wobei die zweite vorgegebene Zeit größer als die erste vorgegebene Zeit ist. Dadurch ist es möglich, Informationsanfragen wiederholt auszusenden und durch die zurückgesandten Informationen die Informationsverarbeitung, beispielsweise zur Berechnung der günstigsten Route eines Fahrzeugs beim Vorhandensein von Verkehrsstörungen auf bestimmten Streckenabschnitten, ständig aktualisiert zu halten. Durch eine automatisch durchgeführte Informationsanfrage ist es weiterhin möglich, ohne Eingriff eines Benutzers den verarbeiteten Informationsbestand aktuell zu halten, was zu einem größeren Maß an Betriebssicherheit des erfindungsgemäßen Verfahrens und des erfindungsgemäßen Funksendeempfängers zur Anforderung und zur Verarbeitung von Informationen führt, insbesondere wenn der Benutzer eine Tätigkeit, beispielsweise das Führen eines Kraftfahrzeugs, ausführt.

Weiterhin ist es in einer weiteren Ausführungsform des erfindungsgemäßen Verfahrens und des erfindungsgemäßen Funksendeempfängers vorteilhaft, eine der ersten Informationsanfrage zeitlich nachfolgende zweite Informationsanfrage auf Benutzeranforderung zu senden, wobei die erste vorgegebene Zeit zum Zeitpunkt der Aussendung der zweiten Informationsanfrage neu gestartet wird. Dadurch kann eine Informationsanfrage auf Benutzeranforderung hin gesendet werden, was bei unerwartet eintretenden Situationsänderungen, z.B. Zieländerungen wünschenswert sein kann. Darüberhinaus kann die Anzahl der Informationsanfragen bei einer Informationsanfrage auf Benutzeranforderung hin geringer gehalten werden und Informationsanfragen gezielt, beispielsweise vor einer absehbar zu treffenden Entscheidung, insbesondere über den Verlauf der Fahrtstrecke, abgesandt werden, was zur Verringerung von Telekommunikationsverkehr und zur Verringerung von Kosten beiträgt, wenn die Informationsanfragen mit Kosten verbunden sind.

Weiterhin ist es von Vorteil, daß die zurückgesandten Informationen Verkehrslagemeldungen, insbesondere nach dem TMC-Standard, enthalten, und daß die Verkehrslagemeldungen vorzugsweise eine oder mehrere bestimmte Regionen betreffen. Dadurch werden im Funksendeempfänger nur die Verkehrslagemeldungen berücksichtigt, die beispielsweise für die durchzuführende Navigation, relevant sind bzw. relevant werden können, weil sie beispielsweise Regionen betreffen, die den in der Informationsanfrage angefragten entsprechen oder benachbart sind.

Weiterhin ist es von Vorteil, daß die Lebensdauer der Verkehrslagemeldungen eine vorgegebene Mindestlebensdauer überschreitet. Verkehrslagemeldungen, die in einer zurückgesandten Information enthalten sind, werden dadurch in jedem Fall empfangen.

In einer besonders vorteilhaften Ausführungsform des erfindungsgemäßen Verfahrens bzw. des erfindungsgemäßen Funksendeempfängers ist die vorgegebene Mindestlebensdauer der Verkehrslagemeldungen größer als die Summe aus der vorgegebenen ersten Zeit und der vorgegebenen zweiten Zeit. Verkehrslagemeldungen, die in einer zurückgesandten Information enthalten sind, können dadurch nicht allein aufgrund einer zu geringen Lebensdauer bei der Informationsverarbeitung unberücksichtigt bleiben. Damit kommt es nicht zu einem kurzzeitigen Verlust der Verkehrslagemeldungen im Funksendeempfänger bei an sich unkritischer Streuung der Zeiten für die Meldungsbeschaffung.

Weiterhin ist es von Vorteil, aus der Menge der eingegangenen Verkehrslagemeldungen eine Anzahl geeigneter und relevanter Verkehrslagemeldungen zu selektieren und einer Verarbeitungseinheit, insbesondere einer Navigationseinheit, zur Verfügung zu stellen. Dadurch kann der Verarbeitungsaufwand durch die Konzentration auf die relevanten Verkehrslagemeldungen reduziert werden, wodurch die Verarbeitung schneller vonstatten geht, die Hard- und Software einfacher gehalten werden kann und dadurch Kosten eingespart werden können.

Es ist weiterhin von Vorteil, daß der Funksendeempfänger einen Speicher umfaßt, in dem empfangene Verkehrslagemeldungen speicherbar sind. Dadurch können die Verkehrslagemeldungen einzeln aus einer zurückgesandten Information ausgelesen werden. Die Verkehrslagemeldungen können verwendet werden, ohne daß alle zurückgesandten Informationen vollständig vorliegen für den Fall, daß mehrere zurückgesandete Informationen beim Funksendeempfänger eintreffen. Das erfindungsgemäße Verfahren und der erfindungsgemäße Funksendeempfänger kompatibel zum Empfang von Verkehrslagemeldungen über einen eindirektionalen Kommunikationskanal, beispielsweise über Rundfunk, Broadcast-SMS oder dgl. Weiterhin können dadurch Verkehrslagemeldungen sinnvoll verwendet werden, wenn die zugehörige zurückgesandte Information nicht vollständig vorliegt.

Ein weiterer Vorteil des erfindungsgemäßen Funksendeempfängers liegt darin, daß der Funksendeempfänger Mittel umfaßt, von den Verkehrslagemeldungen Navigationsmeldungen zu selektieren und einer Navigationseinheit zur Verfügung zu stellen. Dies reduziert den Ressourcenbedarf in der Navigationseinheit.

### Zeichnung

Ausführungsbeispiele der Erfindung sind in der Zeichnung dargestellt und in der nachfolgenden Beschreibung näher erläutert.

Es zeigen
Figur 1 ein Blockschaltbild eines Funksendeempfängers,
Figur 2 ein Sende- und Empfangsdiagramm gemäß einem ersten Ausführungsbeispiel des erfindungsgemäßen Verfahrens und der Funktionsweise des erfindungsgemäßen Funksendeempfängers zwischen dem Funksendeempfänger, einem Funknetz und einem Dienstleister und
Figur 3 ein ein Sende- und Empfangsdiagramm gemäß einem zweiten Ausführungsbeispiel des erfindungsgemäßen Verfahrens und der Funktionsweise des erfindungsgemäßen Funksendeempfängers zwischen dem Funksendeempfänger, einem Funknetz und einem Dienstleister.

### Beschreibung der Ausführungsbeispiele

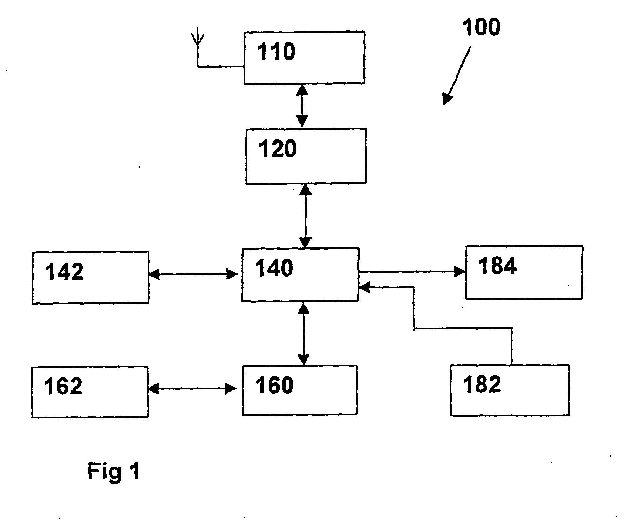

Figur 1 zeigt ein Blockschaltbild eines Funksendeempfängers 100. Der Funksendeempfänger 100 umfaßt eine Sendeempfangseinheit 110, die mit einer Auswerteschaltung 120 verbunden ist. Die Auswerteschaltung 120 ist mit einer Verteilvorrichtung 140 verbunden. Mit der Verteilvorrichtung 140 sind weiterhin ein Speicher 142, eine Navigationseinheit 160, Wiedergabeeinrichtungen 184 sowie Eingabeeinrichtungen 182 verbunden. Die Navigationseinheit 160 ist weiterhin mit einem Navigationsdatenspeicher 162 verbunden. Die Sendeempfangseinheit 110 kann insbesondere derart ausgeführt sein, daß sie eine Aufnahme für ein tragbares Telekommunikationsendgerät, beispielsweise Mobiltelefon umfaßt, so daß die Sendeempfangseinheit 110 erst nach Verbindung des tragbaren Telekommunikationsendgerätes mit der Sendeempfangseinheit 110, beispielsweise durch Einstecken oder dgl., betreibbar ist. Die verschiedenen Einheiten und Einrichtungen des Funksendeempfängers 100 können auf verschiedene Gehäuse verteilt oder in einem Gehäuse integriert sein. Dabei können insbesondere einzelne Einheiten und Einrichtungen des Funksendeempfängers 100 in einem Gehäuse mit einem weiteren Gerät kombiniert sein. So ist es beispielsweise möglich, die Eingabeeinrichtungen 182 und die Wiedergabeeinrichtungen 184 in einen Rundfunkempfänger zu integrieren. In diesem Fall ist der Rundfunkempfänger über eine drahtgebundene oder drahtlose Verbindung, beispielsweise ein CAN-Bus oder dgl, mit dem Funksendeempfänger 100 verbunden. Der Rundfunkempfänger ist vorzugsweise mit einem Decoder für Verkehrslagemeldungen, insbesondere nach dem RDS-TMC-System, vorgesehen, so daß die Verkehrslagemeldungen über die verbindung zwischen dem Funksendeempfänger und dem Rundfunkempfänger vom Funksendeempfänger empfangen werden können.

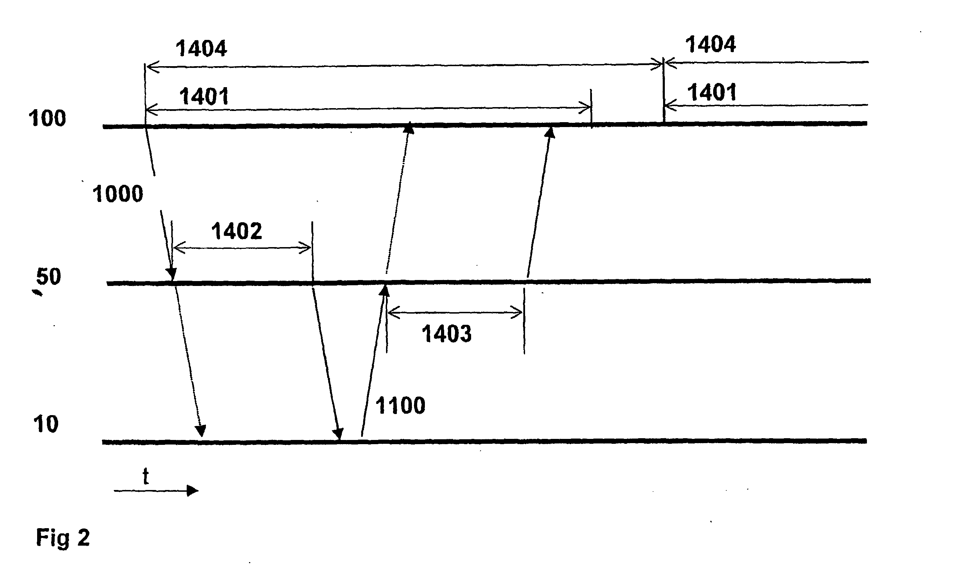

In Figur 2 ist anhand eines Sende- und Empfangsdiagramms der zeitliche Verlauf der Kommunikation nach einem ersten Ausführungsbeispiel des erfindungsgemäßen Verfahrens und der Funktionsweise des erfindungsgemäßen Funksendeempfängers 100 zwischen einem Funksendeempfänger 100, einem Funknetz 50 und einem Dienstleister 10 dargestellt. Eine erste Informationsanfrage 1000 wird von dem Funksendeempfänger 100 abgesandt und dem Funknetz 50 zur Weiterleitung an den Dienstleister 10 übergeben. Die erste Informationsanfrage 1000 wird dabei vom Funksendeempfänger 100 mit einem ersten Gültigkeitszeitwert 1402 versehen. Der erste Gültigkeitszeitwert 1402 bewirkt, daß die erste Informationsanfrage 1000 nach Ablauf des ersten Gültigkeitszeitwertes 1402 dem Dienstleister 10 nicht mehr übermittelt werden kann. Wenn die erste Informationsanfrage 1000 nicht während der Zeitspanne des ersten Gültigkeitszeitwertes 1402 über das Funknetz 50 dem Dienstleister 10 übermittelt wurde, geht die erste Informationsanfrage 1000 verloren.

Wenn die erste Informationsanfrage 1000 dem Dienstleister 10 erfolgreich übermittelt wurde, verarbeitet der Dienstleister 10 den Inhalt der ersten Informationsanfrage 1000 und sendet nach einer gewissen Bearbeitungszeit eine oder mehrere Informationen 1100 an den Funksendeempfänger 100 über das Funknetz 50 zurück. Der Dienstleister 10 versieht die zurückgesandte Information 1100 mit einem zweiten Gültigkeitszeitwert 1403, der die Zeitspanne angibt, während der die zurückgesandte Information 1100 im Netz 50 zur Übersendung an den Funksendeempfänger 100 bereitgehalten wird. Falls die zurückgesandte Information 1100 im Funknetz 50 während einer Zeitspanne, die der zweite Gültigkeitszeitwert 1403 angibt, bereitgehalten wird, ohne daß die zurückgesandte Information 1100 dem Funksendeempfänger 100 übermittelt wird, so geht die zurückgesandte Information 1100 verloren. Wenn die zurückgesandte Information 1100 innerhalb einer Zeitspanne, die vom zweiten Gültigkeitszeitwert 1403 angegeben wird, dem Funksendeempfänger 100 übermittelt wird, kann der Funksendeempfänger 100 die zurückgesandte Information 1100 verarbeiten. Dies geschieht dann, wenn seit dem Zeitpunkt, bei dem die erste Informationsanfrage 1000 registriert wurde, die erste vorgegebene Zeit 1401 nicht überschritten wurde. Falls die zurückgesandte Information 1100 erst nach Ablauf der ersten vorgegebenen Zeit 1401 nach Aussendung der ersten Informationsanfrage 1000 vom Funksendeempfänger 100 empfangen wurde, wird eine Meldung generiert und/oder die Verarbeitung der verspätet zurückgesandten Information 1100 unterdrückt. Die Meldung kann im Funksendeempfänger 100 über die Verteileinrichtung 140 an die Wiedergabeeinrichtungen 184 weitergeleitet werden und dort einem Benutzer ausgegeben werden. Weiterhin ist es möglich, die Meldung an die Navigationseinheit 160 oder dgl. weiterzuleiten.

Nach dem erfindungsgemäßen Verfahren und des erfindungsgemäßen Funksendeempfängers 100 ist es möglich, daß eine zweite Informationsanfrage 1001, die der ersten Informationsanfrage 1000 zeitlich nachfolgt, vom Funksendeempfänger 100 über das Funknetz 50 zum Dienstleister 10 gesendet wird. Die zweite Informationsanfrage 1001 kann aufgrund mehrerer Ereignisse ausgesendet werden, beispielsweise automatisch oder auch auf Benutzeranforderung hin.

Die zweite Informationsanfrage 1001 wird automatisch gesendet, wenn eine zweite vorgegebene Zeit 1404 überschritten wird. Die zweite vorgegebene Zeit 1404 wird zum Zeitpunkt der ersten Informationsanfrage 1000 gestartet. Die erste vorgegebene Zeit 1401 wird zum Zeitpunkt der zweiten Informationsanfrage 1001 neu gestartet. Weiterhin ist vorgesehen, daß die zweite vorgegebene Zeit 1404 größer ist als die erste vorgegebene Zeit 1401. Bei automatischer Wiederholung der Informationsanfragen 1000, 1001 können beliebig viele weitere Informationsanfragen gesendet werden, die sich in ihrem Inhalt unterscheiden können. Zwischen zwei aufeinanderfolgenden Informationsanfragen 1000, 1001 wird die zeitlich vorangehende Informationsanfrage als die erste Informationsanfrage 1000 und die zeitlich nachfolgende Informationsanfrage als die zweite Informationsanfrage 1001 bezeichnet. Die erste und die zweite vorgegebene Zeit 1401, 1404 werden beide zum Zeitpunkt der ersten Informationsanfrage 1000 gestartet. Da die erste vorgegebene Zeit 1401 kleiner ist als die zweite vorgegebene Zeit 1404, endet die erste vorgegebene Zeit 1401, währenddem die zweite vorgegebene Zeit 1404 noch weiterläuft. Nach Ablauf der zweiten vorgegebenen Zeit 1404 wird die zweite Informationsanfrage 1001 ausgesendet und sowohl die erste als auch die zweite vorgegebene Zeit 1401, 1404 werden neu gestartet.

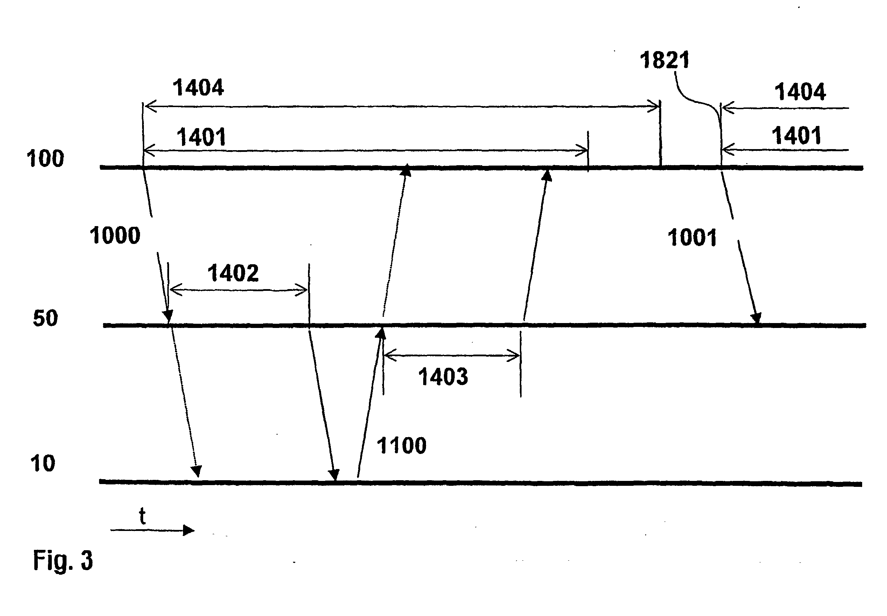

In Figur 3 ist anhand eines Sende- und Empfangsdiagramms der zeitliche Verlauf der Kommunikation nach einem zweiten Ausführungsbeispiel des erfindungsgemäßen Verfahrens und der Funktionsweise des erfindungsgemäßen Funksendeempfängers 100 zwischen einem Funksendeempfänger 100, einem Funknetz 50 und einem Dienstleister 10 dargestellt. Gleiche Bezugszeichen aus Figur 2 beziehen sich auf im wesentlichen gleiche Abschnitte des Verfahrens. Die Informationsanfragen 1000, 1001 können ebenso auch aufgrund einer Benutzeranforderung 1821 initiiert werden. Zwischen zwei aufeinanderfolgenden Informationsanfragen 1000, 1001 wird wieder die zeitlich vorangehende Informationsanfrage als die erste Informationsanfrage 1000 bezeichnet und die zeitlich nachfolgende Informationsanfrage als die zweite Informationsanfrage 1001 bezeichnet. Da zur Initiierung der zweiten Informationsanfrage 1001 nicht die Überschreitung der zweiten vorgegebenen Zeit 1404 als Kriterium herangezogen wird, sondern die Benutzeranforderung 1821, muß die zweite vorgegebene Zeit zum Zeitpunkt der ersten Informationsanfrage 1000 im Ausführungsbeispiel nicht gestartet werden. Zum Zeitpunkt der ersten Informationsanfrage 1000 wird lediglich die erste vorgegebene Zeit 1401 gestartet und bei Aussendung der zweiten Informationsanfrage 1001 neu gestartet.

Der erfindungsgemäße Funksendeempfänger 100 ist zur Durchführung des erfindungsgemäßen Verfahrens geeignet. Dabei sendet die Sendeempfangseinheit 110 die erste Informationsanfrage 1000 über das Funknetz 50 zum Dienstleister 10. In einem der Auswerteschaltung 120 zugeordneten ersten Zeitgeber wird bei Aussendung der ersten Informationsanfrage 1000 durch die Sendeempfangseinheit 110 eine erste Uhr gestartet. Die zurückgesandte Information 1100 wird durch die Auswerteschaltung ausgewertet. Der Inhalt der zurückgesandten Information 1100 kann mittels der Verteilvorrichtung 140 im Speicher 142 gespeichert werden. Von der Navigationseinheit 160 werden Daten, die im Speicher 142 gespeichert sind, über die Verteilvorrichtung 140 zur Aktualisierung der im Navigationsdatenspeicher 162 gespeicherten Daten abgerufen. Falls die Sendeempfangseinheit 110 die zurückgesandte Information 1100 empfängt und nach Vergleich mit der Uhr des ersten Zeitgebers festgestellt wird, daß die erste vorgegebene Zeit 1401 überschritten wurde, wird die Meldung generiert und/oder durch die Verteileinrichtung 140 anderen Einheiten oder Einrichtungen des Funksendeempfängers 100 zur Benutzung weitergeleitet.

Ergebnisse der Informationsverarbeitung in der Navigationseinheit 160 können über die Verteilvorrichtung 140 zu den Wiedergabeeinrichtungen 184 weitergeleitet werden und dort einem Benutzer auf beliebige Art, insbesondere optisch oder akustisch, zugänglich gemacht werden.

Mittels der Eingabeeinrichtungen 182, beispielsweise einer Tastatur, gibt der Benutzer Informationen, beispielsweise zur Steuerung des Funksendeempfängers zur Navigationszieleingabe und dgl. ein. Weiterhin kann mittels der Eingabeeinrichtungen 182 die Information über die Benutzeranforderung 1821 einer zweiten Informationsanfrage 1001 über die Verteilvorrichtung 140 an die Sendeempfangseinheit 110 weitergeleitet werden. Der Sendeempfangseinheit 110 sendet dann die zweite Informationsanfrage 1001 ab.

Für den Fall, daß der Funksendeempfänger 100 auf automatische Wiederholung der Informationsanfragen 1000, 1001 eingestellt ist, kann durch Vergleich einer Uhr eines zweiten, der Auswerteschaltung 120 zugeordneten Zeitgebers festgestellt werden, daß die zweite vorgegebene Zeit 1404 überschritten wurde, wobei die Uhr des zweiten Zeitgebers zum Zeitpunkt der Aussendung der ersten Informationsanfrage 1000 gestartet wurde. In diesem Fall wird die zweite Informationsanfrage 1001 von der Sendeempfangseinheit 110 abgesetzt.

Auf eine Informationsanfrage 1000, 1001 können beliebig viele zurückgesandte Informationen 1100 vom Funksendeempfänger empfangen werden. Das vereinfacht das Aussenden und den Empfang , da nicht auf Vollständigkeit geprüft werden muß. Die Verarbeitung von weiteren zurückgesandten Informationen 1100 verläuft analog der Verarbeitung von zurückgesandten Informationen 1100 nach Aussendung der ersten Informationsanfrage 1000. Es können auch Informationen von Funksendempfänger verarbeitet werden, die vom Dienstleister 10 gesendet werden und die nicht auf eine Informationsanfrage 1000, 1001 des Funksendeempfängers 100 zurückgehen. Insbesondere kommen für eine solche Funktionsweise wichtige Informationen, beipielsweise Verkehrslagemeldungen über Falschfahrer, in Frage.

Das erfindungsgemäße Verfahren und der erfindungsgemäße Funksendeempfänger 100 können zur Anforderung und zur Bearbeitung von beliebigen Informationen verwendet werden. Insbesondere ist das erfindungsgemäße Verfahren und der erfindungsgemäße Funksendeempfänger 100 für Navigationsinformationen geeignet, die einem mobilen Benutzer die Navigation erleichtern. Insbesondere ist das erfindungsgemäße Verfahren und der erfindungsgemäße Funksendeempfänger 100 zur Benutzung in einem Fahrzeug zu Lande, zu Wasser oder in der Luft geeignet. Nachfolgend wird eine besonders vorteilhafte Ausführungsform des erfindungsgemäßen Verfahrens und des erfindungsgemäßen Funksendeempfängers 100 zur Benutzung in einem Landfahrzeug zur überwiegenden Benutzung auf Straßen beschrieben. Zur Navigation in einem Straßennetz ist es sinnvoll, die Ortsinformationen und die möglichen, von dem Straßennetz zur Verfügung gestellten Verbindungsmöglichkeiten in dem Straßenfahrzeug zu speichern, was erfindungsgemäß dadurch ermöglicht wird, daß im Navigationsdatenspeicher 162 erste Ortsinformationen, insbesondere statische Informationen des Straßennetzes, gespeichert sind.

Die erfindungsgemäße Navigationseinheit 160 umfaßt Mittel, die Position des Fahrzeuges jederzeit bzw. in zeitlichen Abständen zu ermitteln. Erfindungsgemäß wird dies beispielsweise durch die Auswertung eines GPS-Systems (Global Positioning System) realisiert. Weiterhin können zur Positionsbestimmung weitere Datenquellen herangezogen werden, insbesondere Geschwindigkeitsdaten, Winkel- oder Orientierungsdaten oder dergleichen. Geschwindigkeitsdaten können von einem fahrzeugeigenen Geschwindigkeitssensor bereitgestellt werden. Winkel bzw. Orientierungsdaten können beispielsweise von einem Winkelbeschleunigungssensor oder dergleichen geliefert werden. Durch die Möglichkeit zur Ortsbestimmung und dem Vorhandensein abgespeicherter erster Ortsinformationen des Straßennetzes ist eine Navigation, insbesondere für den ortsunkundigen Benutzer, möglich.

Durch die Ergänzung der ersten Ortsinformation des Straßennetzes durch aktuelle Information, beispielsweise über den Verkehrszustand auf bestimmten Streckenabschnitten ist eine verbesserte Navigation möglich, die insbesondere eine zeitoptimierte Navigation erlaubt. Dazu werden Informationen von dem Dienstleister 10 über das Funknetz 50 zum Funksendeempfänger 100 im Fahrzeug gesendet. Das Funknetz ist beispielsweise als bidirektionales Funknetz, insbesondere nach der Art eines Mobilfunknetzes nach dem GSM-Standard, ausgebildet. Der Dienstleister 10 empfängt die Informationsanfragen 1000, 1001 des Funksendeempfängers 100 und sendet Informationen 1100, insbesondere gegen Bezahlung, zurück.

In den Ausführungsbeispielen verläuft die Kommunikation über das Funknetz 50 zwischen Funksendeempfänger 100 und Dienstleister 10, insbesondere über Kurznachrichten, beispielsweise SMS-Kurznachrichten nach dem GSM-Standard oder dergleichen. Der Dienstleister 10 wählt aus den ihm vorliegenden Informationen, beispielsweise zu Störungen des Verkehrsflusses im Straßennetz oder dergleichen, in Abhängigkeit der Informationsanfragen 1000, 1001 die zurückgesandten Informationen 1100 aus. Die Informationsanfragen 1000, 1001 enthalten bei dem erfindungsgemäßen Verfahren zweite Ortsinformationen, beispielsweise über die Position des Fahrzeuges, die Regionen, die zu durchfahren beabsichtigt sind oder dergleichen. Insbesondere können die zweiten ortsinformationen auch in Abhängigkeit der ersten Ortsinformationen vom Funksendeempfänger 100 generiert werden. Wenn beispielsweise in der Navigationseinheit zwei verschiedene, für die Optimierung der Navigation etwa gleichwertige Straßenführungen in Betracht gezogen werden, dann kann die zweiten Ortsinformationen der zugehörigen Informationsabfrage 1000, 1001 so gestaltet werden, daß die zurückgesandten Informationen 1100 alle, die relevanten Streckenabschnitte berührenden Verkehrslagemeldungen 1200 beinhalten. Die zweiten Informationen können daher auch in Abhängigkeit der Position des Funksendeempfängers 100 und gleichzeitig in Abhängigkeit der ersten Informationen generiert werden.

Anhand der zweiten Ortsinformationen kann der Dienstleister 10 die angefragten Informationen zusammenstellen und sie dem Funksendeempfänger 100 als zurückgesandte Informationen 1100 zur Verfügung stellen. Insbesondere betreffen die Informationsanfrage 1000, 1001 Regionen, die die zu durchfahren beabsichtigte Strecke weiträumig umfassen.

Die zurückgesandten Informationen 1100 können eine oder mehrere Verkehrslagemeldungen 1200 umfassen. Die Verkehrslagemeldungen 1200 können in codierter oder uncodierter Form übermittelt werden. Erfindungsgemäß werden die Verkehrslagemeldungen 1200 beispielhaft gemäß dem TMC-Code (Traffic Message Channel) codiert, der in der europäischen Vornorm ENV-278-4-1-0012, Juni 1996, definiert ist.

Im Ausführungsbeispiel wertet der Dienstleister die Informationsanfragen 1000, 1001 anhand der zweiten Ortsinformationen aus und vergleicht diese mit den ihm vorliegenden Verkehrslagemeldungen, insbesondere TMC-Meldungen oder dgl. Wenn eine TMC-Meldung den zweiten Ortsinformationen der Informationsanfrage 1000, 1001 entspricht, wird sie in Form einer SMS-Kurznachricht an den Funksendeempfänger 100 übermittelt. Es können mehrere TMC-Meldungen in einer SMS-Kurznachricht gesendet werden.
TMC-Meldungen betreffen dritte Ortsinformationen (Location gemäß dem TMC-Code), die durch eine vierte Ortsinformation (PrimaryLocation, vgl TMC-Standard) und das Ausmaß der Verkehrsstörung (Extent, vgl TMC-Standard) bestimmt sind. Eine TMC-Meldung entspricht dann der zweiten Ortsinformation wenn die dritten Ortsinformationen auf punktartige Orte (point Location, vgl TMC-Standard) zeigen und sich mindestens eine der von der TMC-Meldung betroffene dritte Ortsinformation innerhalb der durch die zweite Ortsinformation der Informationsanfrage definierten Region befindet. Von einer Meldung betroffen sind alle die dritten Ortsinformationen, die durch die vierte Ortsinformation und das Ausmaß der Verkehrsstörung definiert sind, wobei das Ausmaß Werte zwischen 0 und 31 annehmen kann, somit also von einer Meldung 32 punktartige Orte betroffen sein können.

Der Dienstleister hat die Möglichkeit, seine Dienstqualität zu optimieren, indem er besonders wichtige Verkehrslagemeldungen 1200 an den Anfang der zurückgesandten Information 1100 stellt. Weniger wichtigere Verkehrslagemeldungen 1200 können an das Ende der zurückgesandten Information 1100 gestellt werden oder in einer weiteren zurückgesandten Information 1100 an den Funksendeempfänger 100 übermittelt werden. Weiterhin hat der Dienstleister die Möglichkeit, die Komplexität seiner Abfragen zu reduzieren, indem er eine begrenzte Menge von vordefinierten Abfragen bereithält, und in Abhängigkeit der angefragten zweiten Ortsinformationen aufruft. Eine solche Möglichkeit besteht, solange alle von der abgefragten zweiten Ortsinformation betroffenen Verkehrslagemeldungen 1200 und nicht mehr als eine vorgegebene erste Anzahl von Verkehrslagemeldungen 1200 selektiert werden. In einer vorteilhaften Ausführungsform kann der erfindungsgemäße Funksendeempfänger lediglich eine vorgegebene erste Anzahl von Verkehrslagemeldungen, beispielsweise einhundert, speichern. Daher tritt ein Überlauf im Speicher für Verkehrslagemeldungen 1200 im Funksendeempfänger 100 auf, wenn der Dienstleister eine größere Anzahl als die vorgegebene erste Anzahl von Verkehrslagemeldungen zurücksendet. Der Funksendeempfänger 100 erkennt nicht, daß auch Verkehrslagemeldungen 1200 von Bereichen außerhalb der mit der zweiten Ortsinformation zusammenhängenden Regionen übertragen werden. Alle in der zurückgesandten Information 1100 enthaltenen Verkehrslagemeldungen 1200 werden im Funksendeempfänger 100 gleich behandelt.

Der Dienstleister hat die Möglichkeit, einmal angefragte und übertragene Verkehrslagemeldungen 1200 ohne erneute Informationsanfrage 1000, 1001 an den Funksendeempfänger 100 zu senden. So können Änderungen des Inhaltes von Verkehrslagemeldungen 1200 auch ohne erneute Informationsanfrage 1000, 1001 mitgeteilt werden. Es wird jedoch nicht sichergestellt, daß die Verkehrslagemeldung 1200 auch vom Funksendeempfänger 100 empfangen und verwertet werden. Der Dienstleister überträgt keine Verkehrslagemeldungen 1200, die eine vorgegebene Mindestlebensdauer 1220 unterschreiten. Die Lebensdauer 1240 einer Verkehrslagemeldung 1200 kann beispielsweise durch die AlERT-C-Persistance, die im TMC-Code definiert ist, dargestellt werden. Beim erfindungsgemäßen Verfahren ist die Mindestlebensdauer 1220 auf 30 Minuten eingestellt.

Um der Gefahr eines überalterten Verkehrslagemeldungsbestandes im Funksendeempfänger 100 zu begegnen, ist es für den Dienstleister sinnvoll, die Verkehrslagemeldungen 1200, deren Lebensdauer 1240 überschritten ist, nicht durch automatische Löschung nach Ablauf der Lebensdauer 1240, sondern durch eine explizite Löschmeldung zu beenden. Die Löschmeldungen sind ebenfalls Verkehrslagemeldungen 1200 gemäß dem TMC-Standard und haben ebenfalls eine Lebensdauer 1240 von mindestens der Mindestlebensdauer 1220. Löschmeldungen selbst können kommentarlos nach Ablauf der Lebensdauer 1240 entfernt werden.

Der Dienstleister codiert die zurückgesandten Informationen 1100 derartig, daß sie im Funknetz 50 lediglich für eine Zeitdauer Gültigkeit besitzen, die einem ersten Gültigkeitszeitwert 1402 entspricht. Erfindungsgemäß wird die zurückgesandte Information 1100 beispielhaft als SMS-Kurznachricht nach dem GSM-Standard an den Funksendeempfänger 100 übermittelt. Gemäß dem GSM-Standard kann eine SMS-Kurznachricht mit einem Gültigkeitszeitwert (TP-Validity-Period, vergleiche GSM-Standard Dokument RE/SMG-040340PR4, Oktober 1996) versehen werden. Der Gültigkeitszeitwert einer SMS-Nachricht kann dabei in einer bestimmten Codierung des Gültigkeitszeitwertes bei einem Gültigkeitszeitwert von bis zu zwölf Stunden in Vielfachen von fünf Minuten variiert werden. Beispielhaft ist beim erfindungsgemäßen Verfahren und dem erfindungsgemäßen Funksendeempfänger 100 der erste Gültigkeitszeitwert 1402 auf fünf Minuten eingestellt.

Ein der Sendeempfangseinheit 110 zugeordneter Pufferspeicher kann vorgesehen sein, um die zurückgesandten Informationen 1100 aufzunehmen, bis die Auswerteschaltung 120 in der Lage ist, die Auswertung der zurückgesandten Informationen 1100 und der darin enthaltenen Verkehrslagemeldungen 1200 vorzunehmen. Eine erste Verarbeitung der zurückgesandten Informationen 1100 erfolgt in der Auswerteschaltung 120, wo die Verkehrslagemeldung 1200 decodiert werden können. Über die Verteilvorrichtung 140 können die Verkehrslagemeldungen 120 sowohl im Speicher 142 gespeichert werden als auch, zumindest teilweise, mit Hilfe der Wiedergabeeinrichtung 184 an den Benutzer ausgegeben werden.

Die Verteilvorrichtung 140 erkennt beim erfindungsgemäßen Funksendeempfänger 100 anhand von Signalen der Navigationseinheit 160, welche Verkehrslagemeldungen 1200 für die Navigation relevant sind, und führt sie über die Navigationseinheit 160 dem Navigationsdatenspeicher 162 als Navigationsmeldungen 1300 zu. Aufgrund der im Navigationsdatenspeicher 162 vorliegenden Informationen, einerseits die ersten Ortsinformationen, insbesondere des Straßennetzes, und andererseits die Daten aus den Navigationsmeldungen 1300 kann in der Navigationseinheit 160 die optimale Fahrtstrecke, die insbesondere unter Zeitgesichtspunkten optimiert sein kann, berechnet werden.

Die erste vorgegebene Zeit 1401 ist im Ausführungsbeispiel beispielhaft auf 13 Minuten eingestellt. Die zweite vorgegebene Zeit 1404, nach deren Überschreitung die zweite Informationsanfrage 1001 vom Funksendeempfänger 100 abgesetzt wird, ist im Ausführungsbeispiel beispielhaft auf 15 Minuten gesetzt. Damit ist die Bedingung erfüllt, daß die erste vorgegebene Zeit 1401 kleiner ist als die zweite vorgegebene Zeit 1402. Der erste und der zweite Gültigkeitszeitwert 1402, 1403 sind beispielhaft auf fünf Minuten eingestellt.
Die Mindestlebensdauer 1220 ist im Ausführungsbeispiel auf 30 Minuten eingestellt. Damit ist die Bedingung erfüllt, daß die Mindestlebensdauer größer ist als die Summe der ersten vorgegebenen Zeit 1401 und der zweiten vorgegebenen Zeit 1404.

Es ist möglich, daß zurückgesendete Informationen 1100 den Funksendeempfänger 100 sowohl nach der ersten vorgegebenen Zeit 1401 nach der Aussendung der ersten Informationsanfrage 1000, als auch nach der zweiten vorgegebenen Zeit 1404 erreicht, so daß eine zurückgesandte Information 1100, die vom Dienstleister 10 aufgrund der ersten Informationsanfrage 1000 generiert wurde, erst nach Aussendung der zweiten Informationsanfrage 1001 vom Funksendeempfänger 100 empfangen wird. Dies hat zur Folge, daß durch die zweite Informationsanfrage 1001 die erste vorgegebene Zeit 1401 neu gestartet wurde und die zur ersten Informationsanfrage 1000 zugehörige zurückgesandte Information 1100 als gültig angenommen wird. Dieser Fehler kann nicht erkannt werden. Er wirkt sich dann vorteilhaft aus, wenn die in der zurückgesandten Information 1100 enthaltenen Verkehrslagemeldungen 1200 nicht veraltet sind. Da zurückgesandte Informationen 1100 nur maximal gemäß dem zweiten Gültigkeitszeitwert 1403 im Funknetz gespeichert werden soll, ist die Wahrscheinlichkeit, daß es sich um aktuelle Verkehrslagemeldungen handelt, hoch. Ebenso ist im Normalbetrieb die Wahrscheinlichkeit, daß Verkehrslagemeldungen in einem solchen Fall eher zur Verfügung stehen, hoch. Das Auftreten des Fehlers kann sich vorteilhaft auf die Funktion des erfindungsgemäßen Funksendeempfängers 100 auswirken.

In einer vorteilhaften Ausführungsform des erfindungsgemäßen Verfahrens und des erfindungsgemäßen Funksendeempfängers 100 werden die von der Sendeempfangseinheit 110 des Funksendeempfängers 100 empfangenen Informationen 1100 den Informationsanfragen 1000, 1001 nicht zugeordnet und es können auch Verkehrslagemeldungen 1200 verarbeitet werden, die ohne Informationsanfrage 1000, 1001, beispielsweise mittels eines Cell-Broadcast-Shortmessage-Service (CBS) des Dienstleisters 10, übertragen werden. In diesem Fall wird die vom Dienstleister 10 zurückgesendete Information 1100 innerhalb der ersten vorgegebenen Zeit 1401 nach Aussendung der ersten Informationsanfrage 1000 empfangen.

## Patentansprüche

1. Verfahren zur Anforderung und zur Verarbeitung von Informationen, bei dem eine erste Informationsanfrage (1000) von einem Funksendeempfänger (100) abgesandt wird und von einem Dienstleister (10) eine Information (1100) bereitgestellt wird, die zum anfordernden Funksendeempfänger (100) übertragen wird, wobei die Informationsanfrage (1000), insbesondere als Kurznachricht, über ein Funknetz (50), insbesondere ein Mobilfunknetz, übertragen wird, wobei die Informationsanfrage (1000) mit einem vorgegebenen ersten Gültigkeitszeitwert (1402) versehen wird und wobei die zurückgesandte Information (1100), insbesondere in Form von Kurznachrichten, von dem Funksendeempfänger (100) über ein Funknetz (50) empfangen wird, wobei die zurückgesandte Information (1100) von dem Dienstleister (10) mit einem vorgegebenen zweiten Gültigkeitszeitwert (1403) versehen wird und wobei die zurückgesandte Information (1100) codierte Verkehrslagemeldungen, insbesondere gemäß dem TMC-Code oder dem TMC-Standard codierte Verkehrslagemeldungen, umfasst, wobei im Funksendeempfänger (100) der Zeitpunkt der ersten Informationsanfrage (1000) registriert wird und bei Überschreitung einer ersten vorgegebenen Zeit (1401) nach Aussendung der ersten Informationsanfrage (1000) eine Meldung generiert wird und/oder die Verwendung der zurückgesandten Information (1100) unterdrückt wird.

2. Verfahren nach Patentanspruch 1, **dadurch gekennzeichnet, daß** nach Überschreitung des ersten Gültigkeitszeitwertes (1402) die Übertragung der Informationsanfrage (1000, 1001) von dem Funknetz (50) unterbunden wird.

3. Verfahren nach einem der vorhergehenden Patentansprüche, **dadurch gekennzeichnet, daß** nach Überschreitung des zweiten Gültigkeitszeitwertes (1403) die Übertragung der zurückgesandten Informationen (1100) von dem Funknetz (50) unterbunden wird.

4. Verfahren nach einem der vorhergehenden Patentansprüche, **dadurch gekennzeichnet, daß** die erste Informationsanfrage (1000) in Abhängigkeit der Position des Funksendeempfängers (100) generiert wird.

5. Verfahren nach einem der vorhergehenden Patentansprüche, **dadurch gekennzeichnet, daß** eine zweite, der ersten Informationsanfrage (1000) zeitlich nachfolgende Informationsanfrage (1001) nach Überschreitung einer zweiten vorgegebenen Zeit (1404) automatisch gesendet wird, wobei die zweite vorgegebene Zeit (1404) zum Zeitpunkt der ersten Informationsanfrage (1000) gestartet wird, wobei die erste vorgegebene Zeit (1401) zum Zeitpunkt der zweiten Informationsanfrage (1001) neu gestartet wird und wobei die zweite vorgegebene Zeit (1404) größer als die erste vorgegebene Zeit (1401) ist.

6. Verfahren nach einem der Patentansprüche 1-4, **dadurch gekennzeichnet, daß** eine zweite, der ersten Informationsanfrage (1000) zeitlich nachfolgende Informationsanfrage (1001) auf Benutzeranforderung (1821) gesendet wird, wobei die erste vorgegebene Zeit (1401) zum Zeitpunkt der zweiten Informationsanfrage (1001) neu gestartet wird.

7. Verfahren nach einem der vorhergehenden Patentansprüche, **dadurch gekennzeichnet, daß** die zurückgesandte Information (1100) Verkehrsinformationen, vorzugsweise einer bestimmten Region, umfaßt.

8. Verfahren nach Patentanspruche 7, **dadurch gekennzeichnet, daß** die zurückgesandte Information (1100) Verkehrslagemeldungen, insbesondere nach dem TMC-Standard, enthält, wobei die Lebensdauer der Verkehrslagemeldungen eine vorgegebene Mindestlebensdauer überschreiten muß.

9. Verfahren nach Patentanspruch 8, **dadurch gekennzeichnet, daß** die Mindestlebensdauer größer ist als die Summe aus der vorgegebenen ersten Zeit (1401) und der vorgegebenen zweiten Zeit (1404).

10. Verfahren nach Patentanspruch 8 oder 9, **dadurch gekennzeichnet, daß** von den Verkehrslagemeldungen (1200) Navigationsmeldungen (1300) in einer Verteilvorrichtung (140) selektiert und einer Navigationseinheit (160) zur Verfügung gestellt werden.

11. Funksendeempfänger (100) für ein Verfahren nach einem der vorhergehenden Patentansprüche, wobei der Funksendeempfänger (100) Mittel zur Aussendung von Informationsanfragen (1000, 1001), insbesondere in Form von Kurznachrichten, über ein Funknetz (50) umfaßt, wobei der Funksendeempfänger (100) Mittel zum Empfang von zurückgesandten Informationen (1100), umfasst, welche zurückgesandten Informationen codierte Verkehrslagemeldungen, insbesondere nach dem TMC-Code oder dem TMC-Standard codierte Verkehrslagemeldungen, enthalten, wobei die Informationsanfragen (1000) mit einem vorgegebenen ersten Gültigkeitszeitwert (1402) versehen sind und wobei der Funksendeempfänger Mittel zur Auswertung der codierten Verkehrslagemeldungen aufweist, wobei der Funksendeempfänger (100) Mittel aufweist, den Zeitpunkt der ersten Informationsanfrage (1000) zu registrieren und bei Überschreitung der ersten vorgegebenen Zeit (1401) nach Aussendung der ersten Informationsanfrage (1000) eine Meldung zu generieren und/oder die Verwendung der zürückgesandten Information (1100) zu underdrücken.

12. Funksendeempfänger (100) nach Patentanspruch 11, **dadurch gekennzeichnet, daß** der Funksendeempfänger (100) Mittel umfaßt,
- die zweite Informationsanfrage (1001) nach Überschreitung einer zweiten vorgegebenen Zeit (1404) automatisch zu senden,
- die zweite vorgegebene Zeit zum Zeitpunkt der ersten Informationsanfrage (1000) zu starten und
- die erste vorgegeben Zeit (1401) zum Zeitpunkt der zweiten Informationsanfrage (1001) neu zu starten,
und daß die zweite vorgegeben Zeit (1404) größer als die erste vorgegebene Zeit (1401) ist.

13. Funksendeempfänger (100) nach Patentanspruch 11, **dadurch gekennzeichnet, daß** daß der Funksendeempfänger (100) Mittel umfaßt,
- die zweite Informationsanfrage (1001) auf Benutzeranforderung (1821) zu senden und
- die erste vorgegebene Zeit (1401) zum Zeitpunkt der zweiten Informationsanfrage (1001) neu zu starten.

14. Funksendeempfänger (100) nach einem der Patentansprüche 11-13, **dadurch gekennzeichnet, daß** der Funksendeemfänger (100) einen Speicher (142) umfaßt, in dem empfangene Verkehrslagemeldungen (1200) speicherbar sind.

15. Funksendeempfänger (100) nach einem der Patentansprüche 11-14, **dadurch gekennzeichnet, daß** der Funksendeempfänger (100) Mittel umfaßt, seine Position, insbesondere in einem Straßennetz, zu bestimmen.

16. Funksendeempfänger (100) nach einem der Patentansprüche 11-15, **dadurch gekennzeichnet, daß** der Funksendeempfänger (100) Mittel umfaßt, Informationsanfragen (1000, 1001) in Abhängigkeit der Position des Funksendeempfängers (100) zu generieren und zu senden.

17. Funksendeempfänger (100) nach einem der Patentansprüche 11-16, **dadurch gekennzeichnet, daß** der Funksendeempfänger (100) Mittel umfaßt, von den Verkehrslagemeldungen (1200) Navigationsmeldungen (1300) zu selektieren und einer Navigationseinheit (160) zur Verfügung zu stellen.

## Claims

1. Method for requesting and processing information, in which a first information request (1000) is sent by a radio transceiver (100), and a service provider (10) provides information (1100) which is transmitted to the requesting radio transceiver (100), where the information request (1000) is transmitted, particularly in the form of a short message, via a radio network (50), particularly a mobile radio network, where the information request (1000) is provided with a prescribed first validity time value (1402) and where the returned information (1100), particularly in the form of short messages, is received by the radio transceiver (100) via a radio network (50), where the returned information (1100) is provided with a prescribed second validity time value (1403) by the service provider (10) and where the returned information (1100) comprises coded traffic messages, particularly traffic messages coded on the basis of the TMC code or the TMC standard, where the radio transceiver (100) is used to record the time of the first information request (1000) and, if a first prescribed time (1401) after transmission of the first information request (1000) is exceeded, to generate a message and/or to suppress the use of the returned information (1100).

2. Method according to Patent Claim 1, **characterized in that** after the first validity time value (1402) is exceeded the radio network (50) is prevented from transmitting the information request (1000, 1001).

3. Method according to one of the preceding patent claims, **characterized in that** after the second validity time value (1403) is exceeded the radio network (50) is prevented from transmitting the returned information (1100).

4. Method according to one of the preceding patent claims, **characterized in that** the first information request (1000) is generated on the basis of the position of the radio transceiver (100).

5. Method according to one of the preceding patent claims, **characterized in that** a second information request (1001), which comes after the first information request (1000) in time, is sent automatically after a second prescribed time (1404) is exceeded, where the second prescribed time (1404) is started at the time of the first information request (1000), where the first prescribed time (1401) is restarted at the time of the second information request (1001) and where the second prescribed time (1404) is longer than the first prescribed time (1401).

6. Method according to one of Patent Claims 1 to 4, **characterized in that** a second information request (1001), which comes after the first information request (1000) in time, is sent upon a user request (1821), with the first prescribed time (1401) being restarted at the time of the second information request (1001).

7. Method according to one of the preceding patent claims, **characterized in that** the returned information (1100) comprises traffic information, preferably for a particular region.

8. Method according to Patent Claim 7, **characterized in that** the returned information (1100) contains traffic messages, particularly based on the TMC standard, with the lifetime of the traffic messages needing to exceed a prescribed minimum lifetime.

9. Method according to Patent Claim 8, **characterized in that** the minimum lifetime is longer than the sum of the prescribed first time (1401) and the prescribed second time (1404).

10. Method according to Patent Claim 8 or 9, **characterized in that** navigation messages (1300) are selected from the traffic messages (1200) in a distribution apparatus (140) and are made available to a navigation unit (160).

11. Radio transceiver (100) for a method according to one of the preceding patent claims, where the radio transceiver (100) comprises means for transmitting information requests (1000, 1001), particularly in the form of short messages, via a radio network (50), where the radio transceiver (100) comprises means for receiving returned information (1100), which returned information contains coded traffic messages, particularly traffic messages coded on the basis of the TMC code or TMC standard, where the information requests (1000) are provided with a prescribed first validity time value (1402) and where the radio transceiver has means for evaluating the coded traffic messages, where the radio transceiver (100) has means for recording the time of the first information request (1000) and, if the first prescribed time (1401) after transmission of the first information request (1000) is exceeded, generating a message and/or suppressing the use of the returned information (1100).

12. Radio transceiver (100) according to Patent Claim 11, **characterized in that** the radio transceiver (100) comprises means
- for automatically sending the second information request (1001) after a second prescribed time (1404) is exceeded,
- for starting the second prescribed time at the time of the first information request (1000), and
- for restarting the first prescribed time (1401) at the time of the second information request (1001), and **in that** the second prescribed time (1404) is longer than the first prescribed time (1401).

13. Radio transceiver (100) according to Patent Claim 11, **characterized in that** the radio transceiver (100) comprises means
- for sending the second information request (1001) upon a user request (1821), and
- for restarting the first prescribed time (1401) at the time of the second information request (1001).

14. Radio transceiver (100) according to one of Patent Claims 11-13, **characterized in that** the radio transceiver (100) comprises a memory (142) which can be used to store received traffic messages (1200).

15. Radio transceiver (100) according to one of Patent Claims 11-14, **characterized in that** the radio transceiver (100) comprises means for determining its position, particularly in a road network.

16. Radio transceiver (100) according to one of Patent Claims 11-15, **characterized in that** the radio transceiver (100) comprises means for generating and sending information requests (1000, 1001) on the basis of the position of the radio transceiver (100).

17. Radio transceiver (100) according to one of Patent Claims 11-16, **characterized in that** the radio transceiver (100) comprises means for selecting navigation messages (1300) from the traffic messages (1200) and making them available to a navigation unit (160).

## Revendications

1. Procédé pour demander et traiter des informations selon lequel une première requête d'information (1000) est envoyée par un récepteur émetteur radio (100) et un prestataire de service (10) fournit une information (1100) transmise à l'émetteur-récepteur radio (10) requérant,
- la requête d'information (1000) étant transmise par un réseau radio (50), notamment un réseau de radio mobile sous la forme d'un message court,
- la requête d'information (1000) est munie d'une première durée de validité (1402),
- l'information envoyée en retour (1100), notamment sous la forme de message court, est reçu par l'émetteur-récepteur radio (100) par un réseau radio (50),
- l'information (1100) envoyée en retour reçoit une seconde durée de validité (1403) attribuée par le prestataire de service (10) et
- l'information renvoyée (1100) comprend des messages de circulation, codés, notamment selon le code TMC ou des messages de circulation codés selon la norme TMC,
- l'émetteur-récepteur radio (100) enregistrant l'instant de la première requête d'information (1000) et en cas de dépassement d'une première durée prédéfinie (1401) après l'émission de la première requête d'information (1000) on génère un message et/ou on interdit l'utilisation de l'information (1100) envoyée en retour.

2. Procédé selon 1a revendication 1,
**caractérisé en ce qu'**
après dépassement de la première durée de validité (1402), la transmission de la requête d'information (1000, 1001) par le réseau radio (50) est interdite.

3. Procédé selon l'une des revendications précédentes,
**caractérisé en ce qu'**
après dépassement de la seconde durée de validité (1403) on interdit la transmission des informations envoyées en retour (1100) par le réseau radio (50).

4. Procédé selon l'une des revendications précédentes,
**caractérisé en ce qu'**
on génère la première requête d'information (1000) en fonction de la position de l'émetteur-récepteur radio (100).

5. Procédé selon l'une des revendications précédentes,
**caractérisé en ce qu'**
- on envoie automatiquement une seconde requête d'information (1001) qui suit dans le temps la première requête d'information (1000) après dépassement d'une seconde durée prédéterminée (1404),
- la seconde durée prédéterminée (1404) étant démarrée au moment de la première requête d'information (1000),
- la première durée prédéterminée (1401) étant redémarrée à l'instant de la seconde requête d'information (1001), et
- la seconde durée prédéterminée (1404) est supérieure à la première durée prédéterminée (1401).

6. Procédé selon l'une des revendications 1 à 4,
**caractérisé en ce qu'**
- on envoie une seconde requête d'information (1001) concernant la requête d'utilisation (1821) à la suite de la première requête d'information (1000),
- on redémarre la première durée prédéfinie (1401) à l'instant de la seconde requête d'information (1001).

7. Procédé selon l'une des revendications précédentes,
**caractérisé en ce que**
l'information (1100) envoyée en retour contient des informations de circulation concernant notamment une certaine région.

8. Procédé selon 1a revendication 7,
**caractérisé en ce que**
l'information (1100) envoyée en retour contient des messages de circulation, notamment selon la norme TMC, la durée de vie des messages de circulation devant dépasser une durée de vie minimale prédéterminée.

9. Procédé selon la revendication 8,
**caractérisé en ce que**
la durée de vie minimale est supérieure à la somme de la première durée prédéterminée (1401) et de la seconde durée prédéterminée (1404).

10. Procédé selon les revendications 8 ou 9,
**caractérisé en ce que**
parmi les messages de circulation (1200) on sélectionne les messages de navigation (1300) dans un dispositif de distribution (140) et on les fournit à une unité de navigation (160).

11. Emetteur-récepteur radio (100) pour la mise en oeuvre d'un procédé selon l'une des revendications précédentes,
- l'émetteur-récepteur radio (100) comportant des moyens pour émettre des requêtes d'information (1000, 1001), notamment sous la forme de messages courts par un réseau radio (50),
- l'émetteur-récepteur radio (100) comportant des moyens pour recevoir des informations émises en retour (1100) qui contiennent des messages de circulation codés avec des informations en retour, notamment selon le code TMC ou des messages de circulation en codage normal TMC,
- les requêtes d'information (1000) ayant une première durée de validité (1402) prédéfinie et
- l'émetteur-récepteur radio comportant des moyens pour exploiter les messages de circulation,
- l'émetteur-récepteur radio (100) comportant des moyens pour enregistrer l'instant de la première requête d'information (1000) et en cas de dépassement de la première durée prédéterminée (1401) après l'émission de la première requête d'information (1000), il génère un message et/ou bloque l'utilisation de l'information envoyée en retour (1100).

12. Emetteur-récepteur radio (100) selon la revendication 11,
**caractérisé en ce qu'**
il comprend des moyens
- qui émettent la seconde requête d'information (1001), automatiquement après le dépassement d'une seconde durée prédéfinie (1404),
- démarre la seconde durée prédéterminée à l'instant de la première requête d'information (1000) et
- redémarre la première durée prédéterminée (1401) à l'instant de la seconde requête d'information (1001) et
la seconde durée prédéterminée (1404) est supérieure à la première durée prédéterminée (1401).

13. Emetteur-récepteur radio (100) selon la revendication 11,
**caractérisé en ce qu'**
il comprend des moyens
- qui émettent la seconde requête d'information (1001) en réponse à une requête d'utilisateur (1821) et
- redémarre la première durée prédéterminée (1401) à l'instant de la seconde requête d'information (1001).

14. Emetteur-récepteur radio (100) selon l'une des revendications 11 à 13,
**caractérisé en ce qu'**
il comprend une mémoire (140) contenant les messages de circulation (1200) reçus.

15. Emetteur-récepteur radio (100) selon l'une des revendications 11 à 14,
**caractérisé en ce qu'**
il comporte des moyens déterminant sa position, notamment dans un réseau routier.

16. Emetteur-récepteur radio (100) selon l'une des revendications 11 à 15,
**caractérisé en ce qu'**
il comporte des moyens permettant de générer et d'émettre des requêtes d'information (1000, 1001) en fonction de sa position (100).

17. Emetteur-récepteur radio (100) selon l'une des revendications 11 à 16,
**caractérisé en ce qu'**
il comprend des moyens pour sélectionner des messages de navigation (1300) parmi les messages de circulation (1200) et les fournir à une unité de navigation (160).
